# EUROPEAN PATENT APPLICATION

(11) **EP 2 341 454 A1**
(43) Date of publication of application: **06.07.2011**
(21) Application number: 10195631.6
(22) Date of filing: 17.12.2010
(51) Int. Cl.: G06F 17/30, G06F 3/048

(54) **Document information transmission method and apparatus**

(30) Priority: 31.12.2009 KR 20090136223
(71) Applicant: Samsung Electronics Co., Ltd., Gyeonggi-do (KR)
(72) Inventor: Choi, Ko-eun, Gyeonggi-do (KR); Choi, Ryuan, Gyeonggi-do (KR); Kwak, Jung-ki, Gyeonggi-do (KR)
(74) Representative: Jenkins, Richard Gavin

(57) **Abstract**

Provided is a document information transmission method and apparatus, in which upon sensing of a touch or click input on an opened document, the sensed input is recognized as an information transmission command for the document, and upon sensing of a release input on a target object, information about the document is transmitted to the target object.

## Description

### BACKGROUND OF THE INVENTION

### 1. Field of the Invention

The present invention relates generally to a document information transmission scheme, and more particularly, to a document information transmission method and apparatus to transmit information about a document, on which a user is currently working, to another object.

### 2. Description of the Related Art

Bookmarking has been widely used to store an address of a specific site during web browsing, so that a desired web page can be easily accessed later. Recently, the use of Internet services in portable devices using a touch input scheme on small screens has increased. In such portable devices, to store an address of a web page currently being browsed, a bookmarking button is usually clicked in a toolbar or a side menu above the browser. However, in a portable device having a small screen and limited input means, the user needs to perform several clicks and manipulate a separate menu.

Moreover, to transmit information about a document on which the user is currently working using an application other than a web browser to another application or another object, the user must first store the document and then use an open or insertion menu function in the other application, which is troublesome to perform in a portable device.

### SUMMARY OF THE INVENTION

The present invention provides a document information transmission method and apparatus to transmit information about a document to another object in a simple way when a user opens and views the document or edits the document.

According to an aspect of the present invention, there is provided a document information transmission method including, upon sensing a touch or click input on an opened document, recognizing the sensed input as an information transmission command for the document, and, upon sensing a release input on a target object, transmitting information about the document to the target object.

The transmitting of the information may include determining information to be transmitted to the target object according to a type of the target object.

The document information transmission method may further include switching an event mode to a transmission mode for transmitting the information about the document.

The switching of the event mode may include switching the event mode to the transmission mode when the target object to which the information about the document is to be transmitted is selected or opened.

The recognizing the sensed input as the information transmission command may include, upon sensing the touch or click input, generating and displaying a movable object for temporarily storing the information about the document, and, upon sensing a move or drag input, moving the movable object.

The opened document may be a web page.

The transmitting of the information may include storing an address of the web page in a bookmark list if the target object is the bookmark list.

The transmitting of the information may include generating a snap shot of the document and storing the snap shot in a clip board if the target object is the clip board.

The transmitting of the information may include inserting document content into a document which is currently being edited by a document editor if the target object is the document editor.

The transmitting of the information may include storing a file corresponding to the document in a folder if the target object is the folder.

The transmitting of the information may include instructing a text message transmission application to transmit document content to a phone number corresponding to a phone directory item on which the release input is sensed, if the target object is the phone directory.

According to another aspect of the present invention, there is provided a document information transmission apparatus including a touch screen for inputting and outputting information and a controller for, upon sensing a touch or click input on an opened document, recognizing the sensed input as an information transmission command for the document, and upon sensing a release input on a target object, transmitting information about the document to the target object.

### BRIEF DESCRIPTION OF THE DRAWINGS

The above and other features and advantages of the present invention will become more apparent by describing in detail embodiments thereof with reference to the attached drawings in which:
FIG. 1 is a block diagram of a document information transmission apparatus according to an embodiment of the present invention;
FIG. 2 is a flowchart illustrating a document information transmission method according to an embodiment of the present invention;
FIGs. 3 through 6 are diagrams illustrating screens in which an address of a web page is transmitted directly to a bookmark bar, according to an embodiment of the present invention;
FIG. 7 is a diagram illustrating a screen in which a snap shot of a web page is transmitted directly to a clipboard, according to an embodiment of the present invention; and
FIG. 8 is a diagram illustrating a screen in which content of a text document is transmitted directly to a phone directory, according to an embodiment of the present invention.

### DETAILED DESCRIPTION OF EMBODIMENTS OF THE PRESENT INVENTION

Hereinafter, embodiments of the present invention will be described in detail with reference to the accompanying drawings.

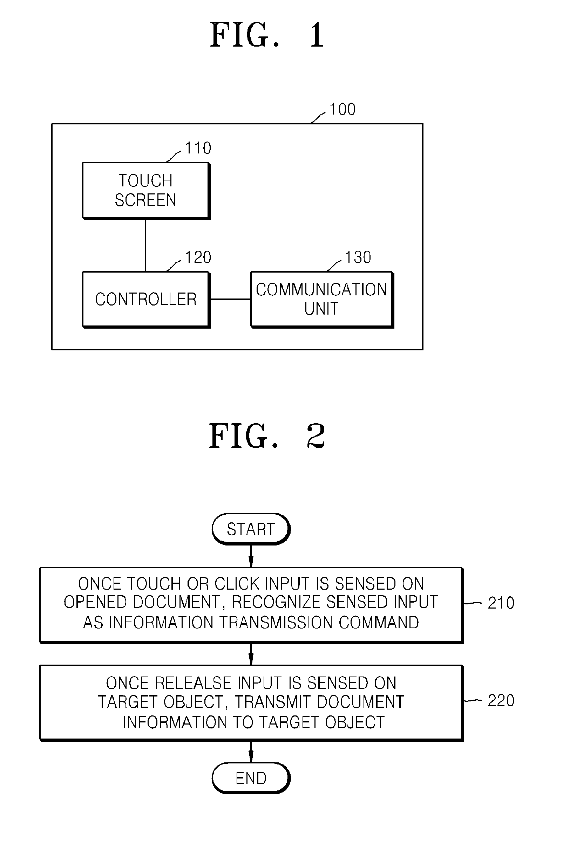

FIG. 1 is a block diagram of a document information transmission apparatus 100 according to an embodiment of the present invention.

Referring to FIG. 1, the document information transmission apparatus 100 may include a touch screen 110 for inputting and outputting information and a controller 120 for processing information which is input through the touch screen 110 and outputting the processing result through the touch screen 110. The document information transmission apparatus 100 may further include a communication unit 130 for communicating with an external server or a network. The communication unit 130 may be a device for receiving a web page through communication with a web server, or accessing a mobile communication network according to an embodiment of the present invention. The controller 120, upon sensing a touch input or a click input on a document displayed through the touch screen 110, recognizes the sensed input as an information transmission command for the document, and upon sensing a release input on a target object, transmits information about the document (or document information) to the target object. If an event mode is a normal mode, the touch or click input is recognized as a normally used event; whereas if the event mode is a transmission mode, the touch or click input is recognized as the information transmission command for transmitting the document information to the target object, that is, an external object. Detailed functions and operations, and various embodiments of the controller 120 will be described below with reference to FIGs. 2 through 8.

FIG. 2 is a flowchart illustrating a document information transmission method according to an embodiment of the present invention.

Referring to FIG. 2, a predetermined application is already executed by the controller 120 in the document information transmission apparatus 100. Once a touch or click input is sensed on a document that is opened on the application, the sensed input is recognized as an information transmission command for transmitting document information to a target object in operation 210. Herein, the document is not limited to a specific format, and may be in any format including one or more images, texts, and/or charts, and the term 'application' refers to software capable of showing the document.

When the application is a web browser, a web page at a Uniform Resource Locator (URL) address requested by a user may be displayed by the web browser. When the user's touch or click input is sensed on the web page, it is recognized as an information transmission command for transmitting information about the currently browsed web page to another object. The information about the web page may include the URL address, a title, and a favorite icon ("favicon") of the web page, content included in the web page, files forming the web page, and a keyword included in meta information.

The event mode is classified into a normal mode and a transmission mode. Thus, in the normal mode, the touch or click input may be recognized as a normally used event such as a document edition command, a link selection command, a panning command, or a scroll command; whereas in the transmission mode, the touch or click input may be recognized as an information transmission command for fixing the document. Switching to the transmission mode may be performed by a specific input from the user. For example, when the user selects or opens a target object to which the document information is to be transmitted, or inputs a specific gesture, the event mode is switched to the transmission mode. When the document whose information is to be transmitted is a web page, the web page is not moved and is fixed in the transmission mode, even if there is a panning input from the user.

Once a release input is sensed on the target object in succession to the touch or click input, the document information is transmitted to the target object in operation 220. The information of the document information that is to be transmitted may be determined depending on the type of target object. For example, when the target object is a phone directory or a text message transmission application, document content may be transmitted in a text format through a text message to a selected phone number. When the target object is a clip board, a snap shot of the document is generated and stored in the clip board. The snap shot may be a screen capture of the document. When the target object is a document editor, document content are transmitted to be inserted into the document which is being edited by the document editor. When the target object is a folder, a file forming the document is transmitted to be stored in the folder. When the target object is a bookmark list, an address, a title, and/or a favicon of a web page, or other information for configuring a bookmark, the information is transmitted to and stored in the bookmark list.

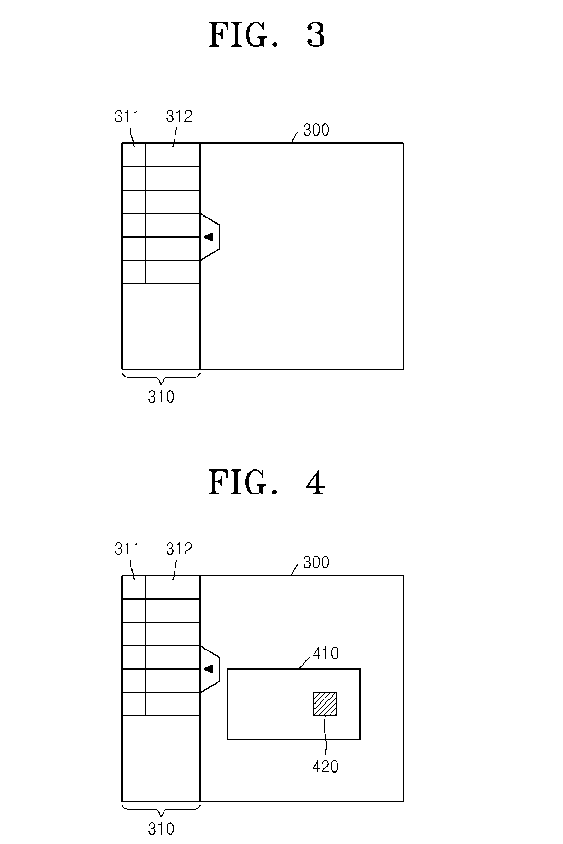

FIGs. 3 through 6 are diagrams illustrating screens in which an address of a web page is transmitted directly to a bookmark bar, according to an embodiment of the present invention.

Referring to FIG. 3, when a user opens a bookmark bar 310 in a browser including information about a web page 300 currently being browsed, an event mode is switched from the normal mode to the transmission mode, such that the web page 300 is fixed. The bookmark bar 310 stores favicons 311 and addresses 312 of web pages previously stored by the user. When the web page 300 is fixed, even if a link included in the web page 300 is selected, the web page 300 is not moved to another web page corresponding to the selected link, and even if there is a panning input, the web page 300 is not moved.

Referring to FIG. 4, upon generation of a touch input on the web page 300, it is recognized that the user desires to transmit information about the web page 300. At this time, a movable object 410 for temporarily storing the information about the web page 300 is generated and displayed, and the movable object 410 includes a favicon 420 of the web page 300 to indicate that the movable object 410 contains the information about the currently browsed web page 300. Since the target object is the bookmark bar 310, the information to be transmitted is determined as the address and favicon 420 of the web page 300.

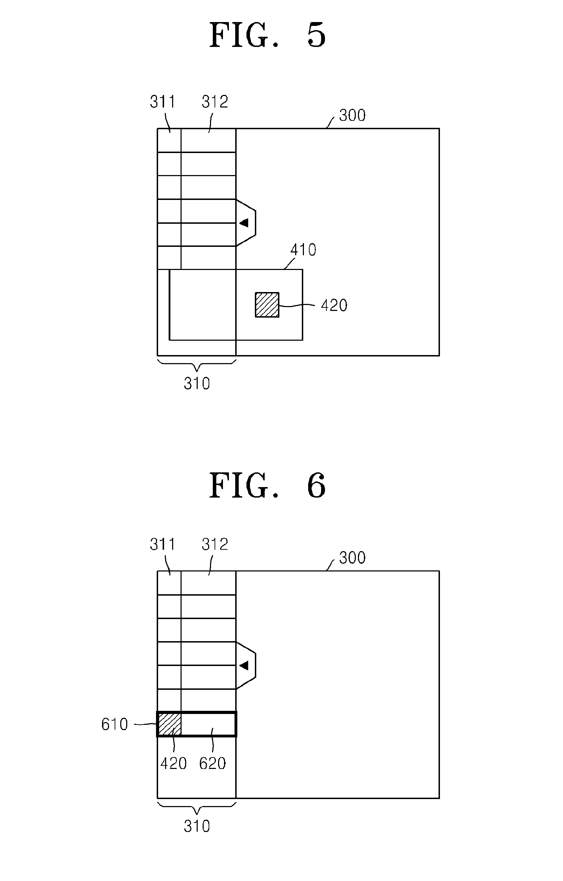

Referring to FIG. 5, the movable object 410 moves above the bookmark bar 310 according to a move or drag input from the user. Referring to FIG. 6, the release input is sensed on the bookmark bar 310, that is, the target object, and the information about the web page 300 of the movable object 410 is transmitted to the bookmark bar 310. The movable object 410 disappears from the screen, and finally a new bookmark item 610 including the favicon 420 and an address 620 for the current web page 300 is added to the bookmark bar 310.

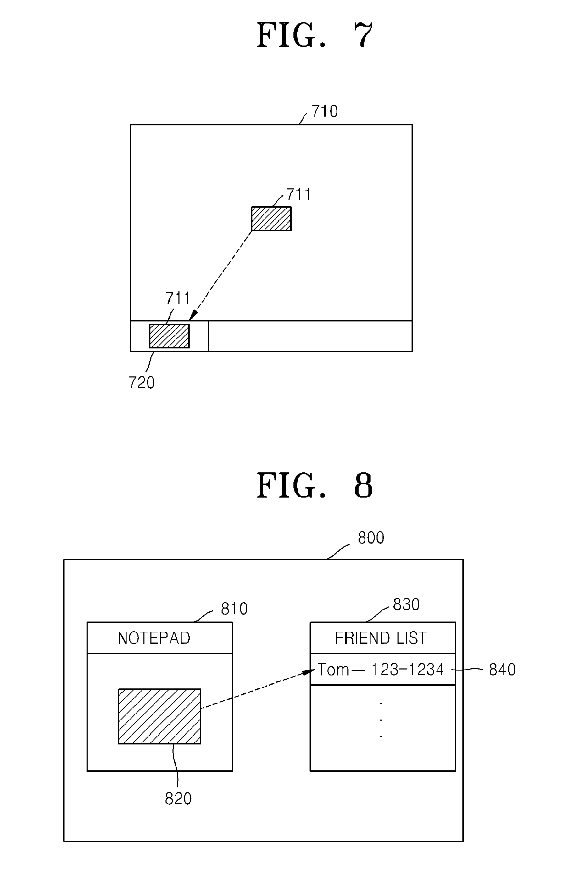

FIG. 7 is a diagram illustrating a screen in which a snap shot of a web page is transmitted directly to a clipboard, according to an embodiment of the present invention.

Referring to FIG. 7, the target object is a clip board 720. Once the user clicks a web page 710, a movable object 711 is generated to transmit information about the web page 710, and the movable object 711 is moved to the clip board 720 and then the release input is generated to drop the movable object 711 onto the clip board 720, whereby the snap shot of the web page 710 is stored in the clip board 720.

Accordingly, the user can transmit information about a web page, such as an address of the web page, to another object only with a mouse click or touch input during web browsing without a keyboard input.

FIG. 8 is a diagram illustrating a screen in which content of a text document is transmitted directly to a phone directory, according to an embodiment of the present invention.

Referring to FIG. 8, an application, notepad 810, is opened on a screen 800. The user edits a text document by using notepad 810. The user also selects and opens a friend list 830 which is similar to a phone directory. Once the user selects the friend list 830, which is the target object, the event mode is switched from the normal mode to the transmission mode. Thus, when the touch or click input is generated on the opened text document, it is recognized as the information transmission command rather than as an event for editing the text document. In this state, information to be transmitted to the target object is determined as content of the text document, considering the type of the target object. In the transmission mode, once the touch or click input is sensed on the text document, a movable object 820 for temporarily storing the content of the text document is generated and displayed. When the user moves the object 820 to a friend item 840 of the friend list 830 and then generates the release input, the content of the text document are transmitted to the friend item 840. As a result of the transmission, a text message transmission program is instructed to transmit the content of the text document to a phone number corresponding to the friend item 840.

After generating and storing a text document, the user can immediately transmit content of the text document to a desired person merely with a mouse click or touch input, without having to open a text message transmission menu and select the stored text document.

While the present invention has been shown and described with reference to embodiments thereof, it will be understood by those of ordinary skill in the art that various changes in form and details may be made therein. Accordingly, the spirit of the present invention may be understood by the following claims, and equal or equivalent modifications thereof fall within the scope of the spirit of the present invention. In addition, a system according to the present invention can be embodied as a computer-readable code on a computer-readable recording medium. The recording medium may be any kind of recording device storing data that is readable by a computer. Examples of the recording medium include Read-Only Memory (ROM), Random Access Memory (RAM), CD-ROMs, magnetic tapes, floppy disks, and optical data storage devices. The computer-readable recording medium can also be distributed over a network of coupled computer systems so that the computer-readable code is stored and executed in a decentralized fashion.

## Claims

1. A document information transmission method comprising:
recognizing a sensed input as an information transmission command for a document, upon sensing a touch or click input on the opened document; and
transmitting information about the document to a target object, upon sensing a release input on the target object.

2. The document information transmission method of claim 1, wherein transmitting the information comprises determining information to be transmitted to the target object according to a type of the target object.

3. The document information transmission method of claim 1, further comprising switching an event mode to a transmission mode for transmitting the information about the document.

4. The document information transmission method of claim 3, wherein switching the event mode comprises switching the event mode to the transmission mode when the target object to which the information about the document is to be transmitted is selected or opened.

5. The document information transmission method of claim 1, wherein recognizing the sensed input as the information transmission command comprises:
generating and displaying a movable object for temporarily storing the information about the document, upon sensing the touch or click input; and
moving the movable object, upon sensing a move or drag input.

6. The document information transmission method of claim 1, wherein the opened document is a web page.

7. The document information transmission method of claim 6, wherein transmitting the information comprises storing an address of the web page in a bookmark list if the target object is the bookmark list.

8. A computer-readable recording medium having recorded thereon a program for executing a document information transmission method comprising:
recognizing a sensed input as an information transmission command for a document, upon sensing a touch or click input on the opened document; and
transmitting information about the document to a target object, upon sensing a release input on the target object.

9. A document information transmission apparatus comprising:
a touch screen for inputting and outputting information; and
a controller for, upon sensing a touch or click input on an opened document, recognizing the sensed input as an information transmission command for the document, and upon sensing a release input on a target object, transmitting information about the document to the target object.

10. The document information transmission apparatus of claim 9, wherein the controller determines information to be transmitted to the target object according to a type of the target object.

11. The document information transmission apparatus of claim 9, wherein if an event mode is switched to a transmission mode for transmitting the information about the document, the controller recognizes the touch or click input as an information transmission command for the document.

12. The document information transmission apparatus of claim 9, wherein the controller switches the event mode to the transmission mode when the target object to which the information about the document is to be transmitted is selected or opened.

13. The document information transmission apparatus of claim 9, wherein the controller generates and displays a movable object for temporarily storing the information about the document upon sensing the touch or click input, and moves the movable object upon sensing a move or drag input.

14. The document information transmission apparatus of claim 9, wherein the opened document is a web page.

15. The document information transmission apparatus of claim 14, wherein the controller stores an address of the web page in a bookmark list if the target object is the bookmark list.
